# EUROPÄISCHE PATENTANMELDUNG

(11) **EP 4 537 655 A1**
(43) Veröffentlichungstag der Anmeldung: **16.04.2025**
(21) Anmeldenummer: 24202259.8
(22) Anmeldetag: 24.09.2024
(51) Int. Cl.: A01G 13/28

(54) **VERBISSSCHUTZVORRICHTUNG FÜR JUNGE PFLANZEN**

(30) Priorität: 11.10.2023 DE 102023127813
(71) Anmelder: 3H-Baumschutz GmbH, 78713 Schramberg (DE)
(72) Erfinder: King, Hubert, 78713 Schramberg (DE)
(74) Vertreter: Westphal, Mussgnug & Partner Patentanwälte mbB

(57) **Zusammenfassung**

Die vorliegende Erfindung betrifft eine Schäl-, Fege- und/oder Verbissschutz-Vorrichtung (1) für Pflanzen, vorzugsweise Forstpflanzen, aufweisend eine Bodenstange (10) und mindestens einen Schutzstreifen (20) mit zwei Endabschnitten (21, 22), wobei die Bodenstange und/oder der mindestens eine Schutzstreifen (20) aus einem nachwachsenden Rohstoffen hergestellt sind bzw. ist, wobei die Bodenstange (10) einen Halteabschnitt (15) mit zwei Schenkeln (11, 12) und einem Aufnahmebereich (13) dazwischen aufweist, und wobei mindestens einer der beiden Endabschnitte (21, 22) des streifenförmigen Schutzstreifens (20) unter Bildung einer Schlaufe (30) in dem Aufnahmebereich (13) gehalten angeordnet ist.

## Beschreibung

Die vorliegende Erfindung betrifft eine Schäl-, Fege- und/oder Verbissschutzvorrichtung für Pflanzen, vorzugsweise Forstpflanzen, mit den Merkmalen des Patentanspruchs 1.

Schäl-, Fege- und/oder Verbissschutzvorrichtungen für Pflanzen sind aus dem Stand der Technik in unterschiedlichen Ausgestaltungen vorbekannt und werden verwendet, um Pflanzen und Bäume vor Verbiss, Schäl- und/oder Fegeschäden durch Wild- und Weidetiere zu verhindern. Hierbei handelt es sich typischer Weise um mechanische Vorrichtungen, die einzelne Pflanzen oder den einzelnen Baum zumindest teilweise für das Wild unzugänglich machen.

Aus der DE 10 2005 022 067 A1 ist beispielsweise ein Verbiss- und Fegeschutz für junge Forstpflanzen als ein Pfahl vorbekannt, der sternförmig angeordnete Federstahldrähte aufweist, die Wild- und Weidetiere von der Pflanze abhalten sollen.

Auch sind aus dem Stand der Technik unterschiedliche Kunststoffmanschetten bekannt, die an Terminaltrieben, insbesondere von Nadelhölzern, angebracht werden, um den Terminaltrieb wirkungsvoll und dauerhaft vor Verbiss zu schützen. Eine solche Vorrichtung ist beispielsweise aus der DE 10 2022 000 793 A1 bekannt.

Verbreitet kommen auch Baumschutz-Hüllen zum Einsatz, wobei die Baumschutz-Hüllen eine hohle, längliche, offenendige Hülle aus lichtdurchlässigem oder transparentem Kunststoff und einen Bodenpfahl umfassen, wobei Kabelbinder verwendet werden, um die Hülle an dem Pfahl zu befestigen. Eine solche Vorrichtung ist aus der EP 0 240 532 A1 bekannt.

Diese bekannten Schäl-, Fege- und/oder Verbissschutzvorrichtungen haben sich in der Vergangenheit bewährt, jedoch besteht der Wunsch nach nachhaltigen Vorrichtungen aus nachwachsenden Rohstoffen wie Holz, Papier oder Jute und anderen Naturstoffen. Es hat sich nämlich gezeigt, dass Baumschutz-Hüllen oder Kunststoffmanschetten aus schwer oder gar unverrottbaren Kunststoffen auf Erdölbasis bestehen. Überreste der Vorrichtungen überdauern teilweise lange Zeit und werden von den Bodenlebewesen mit unabsehbaren Folgen für das Ökosystem in den Boden eingearbeitet. Auch Federstahldrähte oder Metallgestelle stellen eine Gefahr für Natur und Wild dar und sollten nach der Verwendung der Natur entnommen werden und in den Materialkreislauf zurückgeführt werden.

Hier setzt die vorliegende Erfindung an.

Die vorliegende Erfindung widmet sich daher der Aufgabe, eine in zweckmäßiger Weise verbesserte Schäl-, Fege- und/oder Verbissschutzvorrichtung für Pflanzen, vorzugsweise Forstpflanzen, vorzuschlagen. Die vorzuschlagende Vorrichtung soll vorzugsweise aus natürlichen Rohstoffen wie z.B. Holz, Papier oder Jute und anderen Naturstoffen herstellbar sein und noch weiter bevorzugt aus heimischen nachwachsenden Rohstoffen, beispielsweise aus Fichte, Buche, Esche, Tanne, Douglasie o.Ä.

Diese Aufgaben werden durch eine Schäl-, Fege- und/oder Verbissschutzvorrichtung mit den Merkmalen des Patentanspruchs 1 gelöst.

Weitere vorteilhafte Weiterbildungen der vorliegenden Erfindung werden in den Unteransprüchen angegeben.

Die erfindungsgemäße Schäl-, Fege- und/oder Verbissschutzvorrichtung für Pflanzen, vorzugsweise Forstpflanzen, mit den Merkmalen des Patentanspruchs 1 umfasst eine Bodenstange und mindestens einen streifenförmigen Schutzstreifen mit zwei Endabschnitten.

Bevorzugt ist bzw. sind gemäß einer Ausgestaltung die Bodenstange und/oder der mindestens eine streifenförmige Schutzstreifen aus einem natürlichen Rohstoffen hergestellt. Angemerkt wird, dass im Zusammenhang mit der vorliegenden Erfindung unter einem natürlichen Rohstoff beispielsweise Naturstein oder Holz verstanden wird, also Werkstoffe, die man in der Natur vorfindet und bevorzugt lediglich formgebend bearbeitet werden. Insbesondere zählen zu den natürlichen Rohstoffen auch nachwachsende Rohstoffe wie Holz, Papier oder Jute.

Weiterhin kann es vorteilhaft sein, wenn die Bodenstange einen Halteabschnitt mit mindestens zwei Schenkeln und einem Aufnahmebereich dazwischen aufweist. Mindestens einer der beiden Endabschnitte des streifenförmigen Schutzstreifens kann unter Bildung einer Schlaufe in dem Aufnahmebereich gehalten angeordnet sein.

Die vorliegende Erfindung beruht auf der Idee, eine besonders einfache und nachhaltige Vorrichtung für den Schäl-, Fege- und/oder Verbissschutz vorzuschlagen, die nachhaltig aus natürlichen Werkstoffen hergestellt werden kann. Die Vorrichtung soll entweder nach der Verwendung in der Natur verbleiben können und/oder durch natürliche Verrottungsprozesse dem natürlichen Stoffkreislauf zurückgeführt werden können.

Zum Bewerkstelligen des Schäl-, Fege- und/oder Verbissschutzes wird der mindestens eine Schutzstreifen in eine schlaufen- oder ringform gebracht, wobei die so gebildete Schlaufe die zu schützende Pflanze umgeben kann. Dadurch soll die Pflanze vor Verbiss, Verfegen oder Schälschäden durch Wild- und Weidetiere geschützt werden.

In dem Halteabschnitt kann sowohl ein erster Endabschnitt als auch ein zweiter Endabschnitt der zwei Endabschnitte angeordnet werden. Auch kann für den ersten und den zweiten Endabschnitt jeweils ein eigener Halteabschnitt vorgesehen werden. Auch kann eine Ausführungsform der Erfindung vorsehen, dass nur einer der zwei Endabschnitte in dem Halteabschnitt angeordnet ist und der andere der zwei Endabschnitte in anderer Weise an der Bodenstange befestigt ist.

Eine Weiterbildung der vorliegenden Erfindung sieht vor, dass die Bodenstange und/oder dass der mindestens eine Schutzstreifen aus Holz sind bzw. ist. Bevorzugt sind bzw. ist die Bodenstange und/oder der streifenförmige Schutzstreifen aus einem Nadelholz hergestellt. Verbreitete heimische Nadelhölzer sind beispielsweise Fichte, Tanne, Kiefer, Lärche, aber auch Douglasie. Bevorzugt sind bzw. ist der streifenförmige Schutzstreifen und/oder die Bodenstange aus einem Laubholz hergestellt. Verbreitete heimische Laubhölzer sind beispielsweise Buche, Eiche, Birke, Ahorn, Esche, Linde, Kastanie usw. Besonders bevorzugt ist es, wenn die Bodenstange aus einem Nadelholz hergestellt ist und der streifenförmige Schutzstreifen aus Laubholz.

Eine Weiterbildung der vorliegenden Erfindung sieht vor, dass der mindestens eine Schutzstreifen aus Furnier hergestellt ist, wobei besonders bevorzugt der Schutzstreifen aus einem Schälfurnier hergestellt wird. Als Furnier werden typischer Weise 0,5 mm bis 8 mm dicke Blätter aus Holz bezeichnet, wobei der Schutzstreifen nicht zwangsweise, jedoch zweckmäßiger Weise, eine Dicke von 0,5 mm bis 8 mm aufweisen kann. Bevorzugt weist das Furnier, aber auch im allgemeinem der Schutzstreifen, eine Dicke von 1,8mm bis ca. 2,5mm auf. Aus dem Furnier können auf einfache Weise die Schutzstreifen hergestellt werden, wodurch die Schutzblätter ressourcensparend hergestellt werden können, als auch eine gute Verformbarkeit und Atmungsaktivität aufweisen, die ein natürliches Klima an der zu schützenden Pflanze zulässt. Dies stellt einen erheblichen Vorteil insbesondere gegenüber den bekannten Kunststoffhüllen dar, die ein Mikroklima um die Pflanze erzeugen, dass nicht den natürlichen Bedingungen entspricht und oftmals zur Moosbildung und Fäule an der Pflanze führt. Auch kann das Furnier bei Belastung reißen oder brechen, wodurch die Pflanze, wenn sie groß genug ist, die schützende Schlaufe selbst zerstören kann. Der Schutzstreifen schneidet sich dadurch nicht in die Pflanze ein und schädigt nicht das Wachstum und die Holzqualität.

Eine Weiterbildung der vorliegenden Erfindung sieht vor, dass mindestens ein Haltemittel vorgesehen ist, das mindestens einen der zwei Endabschnitte des mindestens einen streifenförmigen Schutzstreifenes in dem Halteabschnitt und/oder in dem Aufnahmebereich befestigt.

Darüber hinaus hat es als vorteilhaft erwiesen, wenn das mindestens eine Haltemittel die zwei Schenkel gegeneinander vorgespannt bzw. verspannt hält. Im einfachsten Fall kann das mindestens eine Haltemittel ein Holznagel, Dübel, Draht, Seil, oder eine Klammer o.Ä. sein. Das mindestens eine Haltemittel hält vorzugsweise eine Klemmung des mindestens einen Endabschnittes der mindestens zwei Endabschnitte in dem Aufnahmebereich über den Anwendungszeitraum aufrecht. Die Klemmung ermöglicht es, dass die Pflanze durch Wachstum eigenständig die Schlaufe öffnen kann, weshalb der Schutzstreifen sich nicht in die Pflanze einschneidet und diese schädigt.

Das mindestens eine Haltemittel verhindert beispielsweise, dass sich die Verbindung zwischen dem mindestens einen Schutzblatt und dem Bodenstab aufgrund von Formänderungen löst. Insbesondere Holz "arbeitet" und verzieht sich und reagiert so beispielsweise auf Feuchtigkeits- und Temperaturschwankungen.

Eine Weiterbildung der vorliegenden Erfindung sieht vor, dass mindestens einer der zwei Endabschnitte gesandet ist. Auf den mindesten einen der zwei Endabschnitte werden Sandkörper aufgetragen und beispielsweise mit Leim, Harz oder einem anderen biologisch abbaubaren Kleber angeordnet. Das Sanden erhöht die Haftreibung, insbesondere die Haftreibung zwischen der Bodenstange und dem mindesten einen der zwei Endabschnitte des Schutzstreifens.

Darüber hinaus hat es sich als vorteilhaft erwiesen, wenn die zwei Endabschnitte des mindestens einen Schutzstreifens in einer Längsachse der Bodenstange benachbart in den Halteabschnitt angeordnet sind. Der mindestens eine Schutzstreifen ist demnach wendelförmig. Auch kann es vorteilhaft sein, wenn die beiden Endabschnitte in der gleichen axialen Position entlang der Längsachse angeordnet sind. Beispielsweise können die zwei Endabschnitte aufeinanderliegend in dem Aufnahmebereich angeordnet sein.

Eine weitere Ausgestaltung der vorliegenden Erfindung sieht vor, dass der mindestens eine Schutzstreifen E-förmig ausgebildet ist und einen einzigen ersten Endabschnitt und mehrere zweite Endabschnitte aufweist. Diese alternative Ausgestaltung kann die Befestigung der Endabschnitte vereinfachen.

Eine Weiterbildung der vorliegenden Erfindung sieht vor, dass die Bodenstange einen rechteckförmigen Querschnitt aufweist. Insbesondere ist es bevorzugt, wenn die Bodenstange einstückig oder mehrteilig ist. Weiterhin ist es bevorzugt, wenn der Aufnahmebereich durch eine Durchbrechung der Bodenstange gebildet ist, die sich in der Längsachse bevorzugt von einem freien Ende entlang der Längsachse über den Halteabschnitt erstreckt.

Weiterhin ist es vorteilhaft, wenn die Bodenstange einen Steckabschnitt aufweist, der bei dem bestimmungsgemäßen Gebrauch der Vorrichtung in den Boden eingesteckt bzw. eingeschlagen bzw. eingerammt werden kann.

Auch hat es sich als vorteilhaft erwiesen, wenn der Steckabschnitt endseitig eine Spitze aufweist, die das Einstecken, Einschlagen oder Einrammen in den Boden vereinfacht.

Eine weitere Weiterbildung der vorliegenden Erfindung sieht vor, dass mehrere streifenförmige Schutzblätter entlang der Längsachse benachbart zueinander in dem Aufnahmebereich angeordnet sind. Die Anzahl der Schutzblätter kann beliebig gewählt werden, wobei typischerweise die Schutzblätter die Pflanze bis in einer Höhe von 1 m bis 1,60 m, vorzugsweise 1,2 m, schützen sollten.

Nachfolgend wird unter Bezugnahme auf die begleitende Zeichnung ein Ausführungsbeispiel der vorliegenden Erfindung im Detail beschrieben. Es zeigen:
- Figur 1: eine vereinfachte Darstellung einer beispielhaften ersten Ausführungsform einer Schäl-, Fege- und/oder Verbissschutz-Vorrichtung aus Holz mit einer Bodenstange und fünf Schutzstreifen,
- Figur 2: eine vereinfachte Darstellung der Bodenstange gemäß Figur 1,
- Figur 3: eine zweite Ausführungsform der Schäl-, Fege- und/oder Verbissschutz-Vorrichtung,
- Figur 4: eine dritte Ausführungsform der Schäl-, Fege- und/oder Verbissschutz-Vorrichtung, und
- Figuren 5: zwei Detaildarstellungen von zwei unterschiedlichen als Klammer ausgebildeten Haltemittel.

Gleiche oder funktional gleiche Teile oder Merkmale werden in der nachfolgenden detaillierten Beschreibung der Figuren mit den gleichen Bezugszeichen gekennzeichnet. Ebenso sind in den Figuren nicht alle gleichen oder funktional gleichen Teile oder Merkmale mit einer Bezugsziffer versehen.

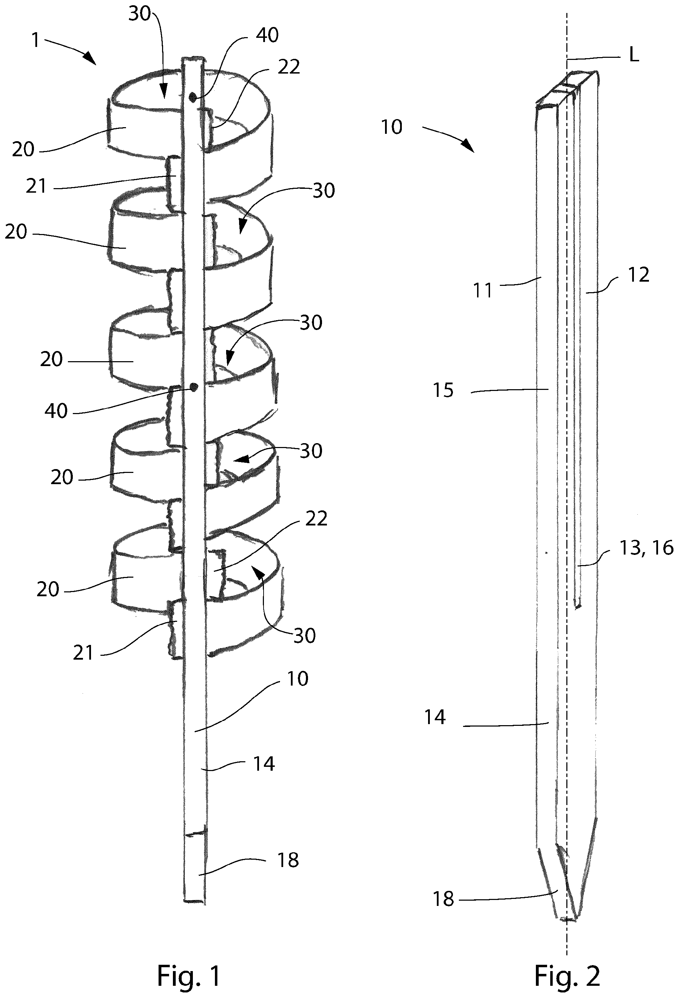

Figur 1 zeigt ein bevorzugtes Ausführungsbeispiel einer Schäl- , Fege- und/oder Verbissschutz-Vorrichtung 1, die nachfolgend zur Vereinfachung nur Vorrichtung genannt wird. Die Vorrichtung 1 soll Pflanzen, vorzugsweise mechanisch, vor Wild- und Weidetierschäden schützen.

Die Vorrichtung 1 umfasst eine Bodenstange 10, die eine Orientierung einer Längsachse L vorgibt. Die Bodenstange 10 wird vorzugsweise aus heimischen Nadelholz hergestellt.

Die Bodenstange 10 ist aus einem einzigen Stück mit vorzugsweise rechteckförmigen Querschnitt, beispielsweise 45 x 25 mm, hergestellt und weist einen Steckabschnitt 14 und einen Halteabschnitt 15 auf. Bevorzugt weist die Bodenstange 10 eine Gesamtlänge von 1,5 m auf.

Bei der bestimmungsgemäßen Verwendung der Vorrichtung 1 wird der Streckabschnitt 14 in einen Untergrund z.B. Waldboden eingesteckt bzw. eingeschlagen bzw. eingerammt. Der Steckabschnitt 14 kann am freien Ende eine Spitze 18 aufweisen, die das Einstecken, Einschlagen oder Einrammen in den Untergrund vereinfachen kann.

Der Halteabschnitt 15 ist entlang der Längsachse L bevorzugt beabstandet zu dem Steckabschnitt 14 angeordnet und weist zwei Schenkel 11, 12 auf. Zwischen den Schenkeln 11, 12 ist ein Aufnahmebereich 13 ausgebildet.

Der Aufnahmebereich 13 kann durch eine Durchbrechung 16 gebildet werden, die die Bodenstange 10 entlang der Längsachse L durchbricht und die Bodenstange 10 in die Schenkel 11, 12 teilt.

Die dargestellte bevorzugte Ausführungsform zeigt eine Durchbrechung 16, die ausgehend von dem freien Ende entlang der Längsachse L in Richtung des Streckabschnitts 14 ausgebildet ist.

In einer nicht dargestellten Ausführungsform können mehrere Durchbrechungen 16 vorgesehen werden, die parallel entlang der Längsachse L angeordnet sind und/oder die in der Längsachse L zueinander beabstandet angeordnet sind.

Die Durchbrechung 16 teilt die im Querschnitt recheckförmige Bodenstange 10 in im Querschnitt vorzugsweise gleich große quader- oder rechteckförmige Schenkel 11, 12. Die Durchbrechung 16 kann in die Bodenstange 10 beispielsweise durch Sägen oder Fräsen eingearbeitet werden.

Darüber hinaus kann der Figur 1 entnommen werden, dass die Vorrichtung 1 mehrere Schutzstreifen 20 aufweist. Der jeweilige Schutzstreifen 20 kann auch als streifenförmiges Schutzblatt oder als Schutzfurnierstreifen bezeichnet werden und weist auf gegenüberliegenden Seiten einen ersten Endabschnitt 21 und einen zweiten Endabschnitt 22 auf.

Der Schutzstreifen 20 ist aus einem natürlichen und nachwachsen Werkstoff hergestellt. In der bevorzugten und hier beschriebenen Ausführungsform ist der Schutzstreifen 20 aus einem Furnier hergestellt, wobei das Furnier vorzugsweise ein Schälfurnier aus Laubholz, beispielsweise Buche, ist.

Der Schutzstreifen 20 weist vorzugsweise eine Dicke zwischen 1mm und 5mm auf und weist eine Rechteckform auf, wobei die Länge um ein Mehrfaches größer als die Breite sein kann.

Der Schutzstreifen 20 kann in die Form einer Schlaufe 30 oder eines Kreises gebracht werden, wobei die beiden gegenüberliegenden Endabschnitte 21, 22 mit der Bodenstange 10 verbunden werden können. Die Schlaufe 30 kann bei der bestimmungsgemäßen Verwendung der Vorrichtung 1 um die Pflanze angeordnet sein, wodurch die Pflanze mechanisch vor den Wild- und Weidetieren geschützt ist.

Die Befestigung des Schutzstreifens 20 an der Bodenstange 10 kann in dem Halteabschnitt 15 erfolgen, wobei mindestens einer der zwei Endabschnitte 21, 22 in dem Halteabschnitt 15 angeordnet wird und dort zwischen den Schenkeln 11, 12 gehalten wird.

Um ein ungewünschtes Lösen der Verbindung zwischen der Bodenstange 10 und dem Schutzstreifen 20 zu verhindern, kann ein Haltemittel 40 vorgesehen sein, durch welches die zwei Schenkel 11, 12 gegeneinander verspannt gehalten werden. Das Haltemittel kann beispielsweise ein Dübel, eine Klammer, ein Nagel oder seilförmig, insbesondere aus Draht, sein, wobei bevorzugt das Haltemittel 40 ebenfalls aus einem natürlichen Werkstoff hergestellt sein kann.

In dem Ausführungsbeispiel gemäß Figur 1 weist die Vorrichtung 1 fünf Schutzstreifen 20 auf, wobei die jeweiligen Endbereiche 21, 22 der einzelnen Schutzstreifen 20 und der benachbarten Schutzstreifen 20 in der Längsachse L benachbart zueinander angeordnet sind. Die Schutzstreifen 20 sind wendelförmig ausgebildet.

Ein unbeabsichtigtes Rausrutschen des jeweiligen Endabschnitts 21 und/oder 22 der Schutzstreifen 20 aus dem Halteabschnitt 15 kann darüber hinaus beispielsweise durch die Verwendung von Klebstoffen verhindert werden. Ebenfalls kann es vorteilhaft sein, wenn mindestens einer der zwei Endabschnitte 21, 22 gesandet ist, wodurch die Haftreibung zwischen den Endabschnitten 21, 22 und der Bodenstange 10 bzw. den Schenkeln 11 12 vergrößert werden kann. Hierzu kann mindestens einer der zwei Endabschnitte 21, 22 des Schutzstreifens 20 mit Sandkörnern versehen werden, wobei die Sandkörner mittels eines Klebemittels auf Leim-, Kleber-, oder Harzbasis an dem Schutzstreifen 20 gehalten werden.

Eine weitere, besonders biologische Art und Weise, die Schutzstreifen 20 an den Schenkeln 11, 12 oder an der Bodenstange 10 zu befestigen oder zusätzlich zu befestigen, ist der Einsatz von Pilzen, die das Holz der Bodenstange 10 und des Schutzstreifens 20 auf natürliche Weise verbinden.

Weiterhin kann es vorteilhaft sein, wenn die Bodenstange und/oder der mindestens eine Schutzstreifen 20 mit einem chemischen Schäl-, Fege- und/oder Verbissschutz versehen sind bzw. ist. Der chemische Schäl-, Fege- und/oder Verbissschutz verhindert, dass das Wild die Vorrichtung 1 angeht und ggf. beschädigt, um dennoch an die geschützte Pflanze zu gelangen.

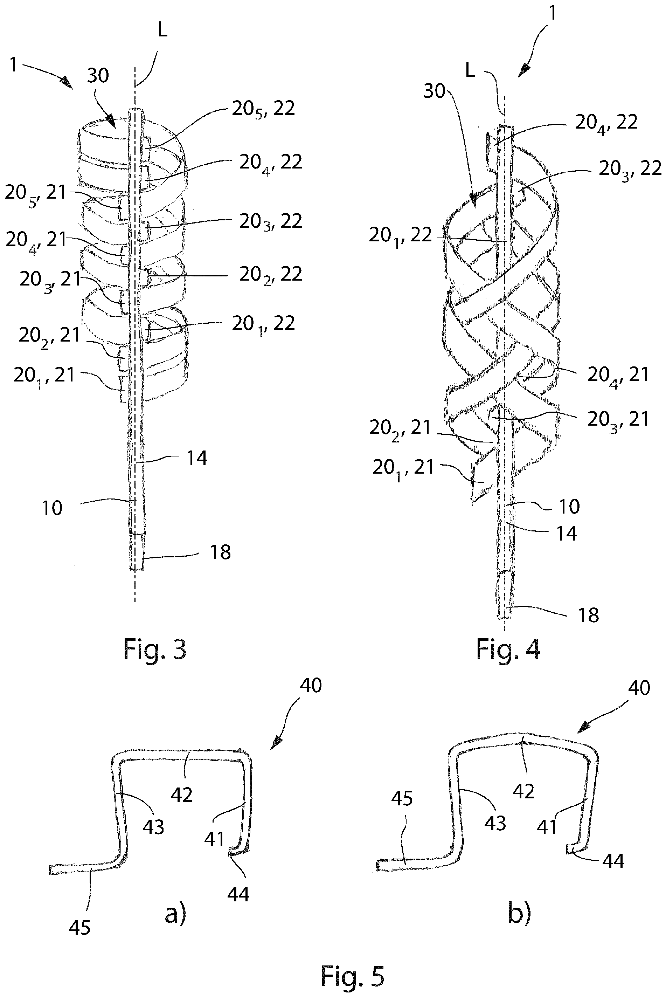

Das zweite und dritte Ausführungsbeispiel gemäß den Figur 3 und 4 unterscheidet sich von dem zuvor beschriebenen Ausführungsbeispiel in den Anordnungen der Schutzstreifen 20.

In den Figuren 3 und 4 sind die Schutzstreifen 20 mit einer größeren Steigung in der Wendel angeordnet, wodurch die Schutzstreifen 20 der Vorrichtungen 1 steifer angeordnet sind. Dadurch ist es beispielsweise für die Wild- und Weidetiere schwieriger, die Schutzstreifen 20 beiseite zu biegen, um an die zu schützende Pflanze zu gelangen.

In Figur 3 sind die einzelnen Schutzstreifen 20 wendelförmig gleichsinnig angeordnet, wobei zwei benachbarte Schutzstreifen 20 sich kreuzen. Zur Veranschaulichung sind die einzelnen Schutzstreifen 20 mit Indizes (1...5) versehen.

In Figur 4 sind die Schutzstreifen 20 wendelförmig und gegensinnig angeordnet. Die Schutzstreifen 20 können eine Art Geflecht bilden, wobei bei dieser Ausführungsform vorzugsweise die Anzahl der Schutzstreifen 20 einer geraden Zahl entspricht.

Figuren 5a und 5b zeigen zwei unterschiedliche Haltemittel 40, die nach Art einer Klammer ausgebildet sind. Das jeweilige Haltemittel 40 kann aus Federstahl oder einem Federstahl-Draht hergestellt sein und umfasst drei u-förmig angeordnete Haltemittelabschnitte 41, 42, 43, die die Bodenstange 10 umgreifen können. Die zwei gegenüberliegenden Haltemittelabschnitte 41, 43 laufen an dem von dem mittleren Haltemittelabschnitt 42 abgewandten Ende zum Erzeugen einer Spannkraft zusammen. Hierzu beträgt ein Winkel zwischen den Haltemittelabschnitten 41, 42, 43 ca. 80°.

Der Haltemittelabschnitt 41 kann ferner eine Haltenase 44 aufweisen, die die Bodenstange 10 umgreifen kann. Bei Anbringen des Haltemittels 40 erleichtert die Haltenase 44 die Montage.

Auch kann der Haltemittelabschnitt 43 einen abstehenden Hebelarm 45 aufweisen, der insbesondere einem vereinfachten Anbringen des Haltemittels 40 aufgrund seiner Hebelwirkung dient.

Der Unterschied zwischen den zwei in den Figuren 5a und 5b dargestellten Haltemitteln 40 ist die gebogene Ausgestaltung des mittleren Haltemittelabschnitts 42. In Figur 5b ist der mittlere Haltemittelabschnitt 42 leicht konkave geformt, um die Klemmwirkung des Haltemittels 40 zu verbessern.

### Bezugszeichenliste

- 1: Vorrichtung
- 10: Bodenstange
- 11: Schenkel
- 12: Schenkel
- 13: Aufnahmebereich
- 15: Halteabschnitt
- 16: Durchbrechung
- 20: Schutzstreifen
- 21: Endabschnitt
- 21: Endabschnitt
- 30: Schlaufe
- 40: Haltemittel
- 41: Haltemittelabschnitt
- 42: Haltemittelabschnitt
- 43: Haltemittelabschnitt
- 44: Haltenase
- 45: Hebelarm

- L: Längsachse

## Patentansprüche

1. Schäl-, Fege- und/oder Verbissschutz-Vorrichtung (1) für Pflanzen, vorzugsweise Forstpflanzen, aufweisend
- eine Bodenstange (10) und
- mindestens einen Schutzstreifen (20) mit zwei Endabschnitten (21, 22),
- wobei die Bodenstange und/oder der mindestens eine Schutzstreifen (20) aus einem nachwachsenden Rohstoffen hergestellt sind bzw. ist,
- wobei die Bodenstange (10) einen Halteabschnitt (15) mit zwei Schenkeln (11, 12) und einem Aufnahmebereich (13) dazwischen aufweist, und
- wobei mindestens einer der beiden Endabschnitte (21, 22) des streifenförmigen Schutzstreifens (20) unter Bildung einer Schlaufe (30) in dem Aufnahmebereich (13) gehalten angeordnet ist.

2. Vorrichtung (1) nach Anspruch 1,
**dadurch gekennzeichnet, dass** die Bodenstange (10) und/oder der mindestens eine Schutzstreifen (20) aus Holz sind bzw. ist.

3. Vorrichtung (1) nach Anspruch 1 oder 2,
**dadurch gekennzeichnet, dass** der mindestens eine Schutzstreifen (20) ein Furnierstreifen, insbesondere ein Schälfurnierstreifen, ist.

4. Vorrichtung (1) nach einem der vorgenannten Ansprüche, **dadurch gekennzeichnet, dass** mindestens ein Haltemittel (40) vorgesehen ist, das mindestens einen der zwei Endabschnitte (21, 22) des mindestens einen Schutzstreifens (20) in dem Aufnahmebereich (13) befestigt.

5. Vorrichtung (1) nach einem der vorgenannten Ansprüche, **dadurch gekennzeichnet, dass** das Haltemittel (40) die zwei Schenkel (11, 12) gegeneinander verspannt.

6. Vorrichtung (1) nach einem der vorgenannten Ansprüche, **dadurch gekennzeichnet, dass** mindestens einer der zwei Endabschnitte (21, 22) gesandet ist.

7. Vorrichtung (1) nach einem der vorgenannten Ansprüche, **dadurch gekennzeichnet, dass** die zwei Endabschnitte (21, 22) des mindestens einen Schutzstreifens (20) in einer Längsachse (L) der Bodenstange (10) benachbart in dem Halteabschnitt (15) angeordnet sind.

8. Vorrichtung (1) nach einem der vorgenannten Ansprüche, **dadurch gekennzeichnet, dass** der mindestens eine Schutzstreifen (20) E-förmig ausgebildet ist und einen einzigen ersten Endabschnitt (21) und mehrere zweite Endabschnitte (22) aufweist.

9. Vorrichtung (1) nach einem der vorgenannten Ansprüche, **dadurch gekennzeichnet, dass** die Bodenstange (10) einen rechteckförmigen Querschnitt aufweist.

10. Vorrichtung (1) nach einem der vorgenannten Ansprüche, **dadurch gekennzeichnet, dass** der Aufnahmebereich (13) durch eine Durchbrechung (16) der Bodenstange (10) gebildet ist.

11. Vorrichtung (1) nach einem der vorgenannten Ansprüche, **dadurch gekennzeichnet, dass** mehrere Schutzstreifen (20) in der Längsachse (L) angeordnet sind.
